# EUROPÄISCHE PATENTANMELDUNG

(11) **EP 2 287 059 A2**
(43) Veröffentlichungstag der Anmeldung: **23.02.2011**
(21) Anmeldenummer: 10008634.7
(22) Anmeldetag: 19.08.2010
(51) Int. Cl.: B60W 30/02, B60W 40/06

(54) **Kraftfahrzeug**

(30) Priorität: 21.08.2009 DE 102009038421
(71) Anmelder: Audi AG, 85045 Ingolstadt (DE)
(72) Erfinder: Held, Ralf, 85072 Eichstätt (DE)
(74) Vertreter: Thielmann, Frank

(57) **Zusammenfassung**

Kraftfahrzeug, mit einem automatischen Sicherheitssystem, durch das bei einer erkannten gefährlichen Situation ein Bremsvorgang auslösbar ist, wobei das Sicherheitssystem (2) so ausgebildet ist, dass vor oder beim Auslösen des Bremsvorgangs der zwischen den Reifen des Kraftfahrzeugs und dem Fahrbahnbelag wirkende Reibwert zumindest näherungsweise erfasst oder abgeschätzt und bei dem Bremsvorgang berücksichtigt wird.

## Beschreibung

Die Erfindung betrifft ein Kraftfahrzeug, mit einem automatischen Sicherheitssystem, das derart ausgebildet ist, dass bei einer erkannten gefährlichen Situation ein Bremsvorgang auslösbar ist, indem vor oder beim Auslösen des Bremsvorgangs der zwischen den Reifen des Kraftfahrzeugs und dem Fahrbahnbelag wirkende Reibwert zumindest näherungsweise erfasst oder abgeschätzt und bei dem Bremsvorgang berücksichtigt wird.

Sicherheitssysteme dieser Art zählen zu den Fahrerassistenzsystemen, die zur Entlastung des Fahrers beitragen und die Sicherheit erhöhen sollen. Derartige Sicherheitssysteme können beispielsweise im Kolonnenverkehr automatisch einen Bremsvorgang auslösen und steuern, anschließend kann auch das Wiederanfahren automatisch erfolgen. Dazu sind verschiedene Umfeldsensoren vorgesehen, beispielsweise Abstandssensoren, die mit Radarsignalen arbeiten, um andere Verkehrsteilnehmer zu erfassen und bestimmte Aktionen wie einen Bremsvorgang oder einen Anfahrvorgang auszulösen.

Aus der DE 10 2007 039 375 A1 ist ein Kraftfahrzeug mit einem Sicherheitssystem bekannt, das eine Stop & Go-Funktion aufweist. Dieses Fahrerassistenzsystem übernimmt im Kolonnenverkehr automatisch das Bremsen bis zum Stillstand und das anschließende Wiederanfahren. Dieses System wird als Adaptive Cruise Control (ACC) bezeichnet und weist Sensoren zur Erfassung des Fahrzeugumfelds auf, ein Steuergerät ist mit Bremseinrichtungen der Vorder- und Hinterräder verbunden, um einen Bremsvorgang durchzuführen.

Ein weiteres Fahrerassistenzsystem ist aus der DE 10 2006 015 491 A1 bekannt. Der Bremsvorgang wird dabei durch die Beeinflussung des Bremsdrucks der hydraulischen Bremsanlage des Kraftfahrzeugs geregelt.

In der WO 82/04019 A1 wird eine Anordnung zum Ermitteln des Haftbeiwertes einer Fahrbahn beschrieben, mit der während eines Testzyklus ein Istwert für einen Schlupfwert ermittelt wird. Sofern der ermittelte Istwert für den Schlupf unterhalb einer vorgegebenen Schwelle liegt, wird eine Anzeige betätigt. Diese Anzeige, die entweder ein- oder ausgeschaltet ist, enthält allerdings keine Information über die konkrete Fahrsituation oder eine konkrete Gefahr.

In der DE 10 2007 049 249 A1 wird ein System zur Reduktion des Bremsweges eines Fahrzeuges vorgeschlagen, bei dem eine Übertragung von fahrzeugspezifischen Daten über eine Fahrzeug-Fahrzeug-Kommunikation erfolgt, diese Daten werden in ein Sicherheitskonzept eingebunden, zu diesen Daten gehört auch ein geschätzter Reibwert.

Diese bekannten Fahrerassistenzsysteme gehen von normalen Bedingungen, zu denen unter anderem die Straßenverhältnisse zählen, aus. Sofern die Straßenverhältnisse jedoch zum Beispiel witterungsbedingt verschlechtert sind, ist es fraglich, ob das Sicherheitssystem optimal funktioniert.

Der Erfindung liegt die Aufgabe zugrunde, ein Kraftfahrzeug mit einem automatischen Sicherheitssystem anzugeben, das durch das der Fahrer früher vor einer drohenden Gefahr gewarnt wird.

Zur Lösung dieser Aufgabe ist bei einem Kraftfahrzeug der eingangs genannten Art erfindungsgemäß vorgesehen, dass das Sicherheitssystem so ausgebildet ist, dass beim oder vor dem Auslösen des Bremsvorgangs eine Warnbremsung ausgelöst wird, die wesentlich kürzer als der nachfolgende Bremsvorgang ist.

Bei dem erfindungsgemäßen Kraftfahrzeug ist das Sicherheitssystem so ausgebildet, dass beim oder vor dem Auslösen des Bremsvorgangs ein optisches und/oder akustisches Warnsignal ausgegeben wird. Durch das Warnsignal wird der Fahrer des Kraftfahrzeugs auf eine drohende Gefahr aufmerksam gemacht, sodass er rechtzeitig reagieren und Maßnahmen ergreifen kann.

Durch die erfindungsgemäß vorgesehene Berücksichtigung des Reibwerts werden dem Sicherheitssystem Daten mit einer höheren Qualität zur Verfügung gestellt, da der näherungsweise erfasste oder abgeschätzte Reibwert die physikalischen Gegebenheiten, die beim Bremsvorgang relevant sind, besser berücksichtigt. Bei herkömmlichen Sicherheitssystemen wird hingegen ein konstanter Reibwert angenommen, der jedoch nur bei optimalen Straßen- und Witterungsverhältnissen tatsächlich vorliegt. Falls der tatsächliche Reibwert schlechter ist, besteht die Gefahr, dass im Falle einer erkannten gefährlichen Situation zwar ein Bremsvorgang ausgelöst wird, dieser kann jedoch in einem längeren Bremsweg oder einer zu geringen Verzögerung resultieren. Diese Nachteile werden jedoch erfindungsgemäß vermieden, indem die Auslösung und Steuerung des Bremsvorgangs in Abhängigkeit des Reibwerts vorgenommen wird.

Im Rahmen der Erfindung kann es vorgesehen sein, dass das Sicherheitssystem so ausgebildet ist, dass die Erfassung oder Schätzung des Reibwerts während eines Bremsvorgangs mit zumindest näherungsweise konstanter Verzögerung erfolgt. Dazu kann ein Bremsvorgang mit bestimmten Parametern wie einem festgelegten Bremsdruck durchgeführt werden. Sofern sich dabei Abweichungen beim Bremsverhalten, z. B. ein verlängerter Bremsweg, ergeben, kann daraus auf einen veränderten Reibwert geschlossen werden, der anschließend von dem Sicherheitssystem berücksichtigt wird.

Ein besonders sicherer Betrieb des Kraftfahrzeugs wird ermöglicht, wenn das Sicherheitssystem so ausgebildet ist, dass der Bremsvorgang zeitlich früher ausgelöst wird, wenn der erfasste oder abgeschätzte Reibwert niedriger als ein normaler Reibwert ist. Durch die vorzeitige Auslösung des Bremsvorgangs wird die Verschlechterung des Reibwerts kompensiert, die ansonsten zu einer verzögerten Bremswirkung oder einem verlängerten Bremsweg führen würde.

Es liegt auch im Rahmen der Erfindung, dass bei dem erfindungsgemäßen Kraftfahrzeug das Sicherheitssystem so ausgebildet ist, dass der Bremsvorgang mit einer größeren Verzögerung durchgeführt wird, wenn der erfasste oder abgeschätzte Reibwert niedriger als ein normaler Reibwert ist. Die größere Verzögerung kann durch einen stärkeren Bremsdruck bewirkt werden, sodass sich der niedrigere Reibwert nicht nachteilig auf den Bremsweg oder den Zeitpunkt des Stillstands des Fahrzeugs bei einem Bremsvorgang auswirkt.

Gemäß einer Variante der Erfindung kann es vorgesehen sein, dass das Sicherheitssystem des erfindungsgemäßen Kraftfahrzeugs so ausgebildet ist, dass beim oder vor dem Auslösen des Bremsvorgangs eine Warnbremsung ausgelöst wird, die wesentlich kürzer als der nachfolgende Bremsvorgang ist und deren Verzögerung vorzugsweise größer als die Verzögerung des zumindest unmittelbar nachfolgenden Bremsvorgangs ist. Die Warnbremsung hat die Wirkung eines Warnsignals, um den Fahrer vor einer drohenden Gefahr zu warnen, sodass dieser anschließend aktiv eingreifen kann, beispielsweise durch eine Lenkbewegung oder dergleichen. Die Warnbremsung wird vom Fahrer als kurzer Ruck wahrgenommen, daran schließt sich der automatische von dem Sicherheitssystem ausgelöste Bremsvorgang an.

In weiterer Ausgestaltung der Erfindung kann es vorgesehen sein, dass das Sicherheitssystem des erfindungsgemäßen Kraftfahrzeugs zunächst einen ersten Teilbremsvorgang mit einer ersten Verzögerung und anschließend einen zweiten Teilbremsvorgang mit einer zweiten Verzögerung auslöst. Sofern allerdings durch den ersten Teilbremsvorgang die Gefahrensituation beseitigt wurde, weil zum Beispiel der Abstand zum vorausfahrenden Fahrzeug genügend groß ist, kann gegebenenfalls auf den zweiten Teilbremsvorgang verzichtet werden.

Es ist besonders zweckmäßig, wenn die erste Verzögerung und/oder die zweite Verzögerung im Wesentlichen konstant ist bzw. sind. Eine derartige konstante Verzögerung wird vom Fahrer nicht als unangenehm wahrgenommen, wodurch sich die Akzeptanz des Sicherheitssystems erhöht. Es kann auch vorgesehen sein, dass die erste Verzögerung bzw. die zweite Verzögerung während des jeweiligen Teilbremsvorgangs zumindest geringfügig ansteigt. Insbesondere kann es vorgesehen sein, dass die zweite Verzögerung größer als die erste Verzögerung ist. Auf diese Weise wird durch das Sicherheitssystem zunächst der erste Teilbremsvorgang mit der ersten Verzögerung und anschließend der zweite Teilbremsvorgang mit der zweiten, größeren Verzögerung ausgelöst. Durch diese abgestufte Verzögerung werden starke Verzögerungen auf diejenigen Fälle beschränkt, bei denen ein starkes Abbremsen zur Unfallvermeidung erforderlich ist.

Die Erfindung wird nachfolgend anhand von Ausführungsbeispielen unter Bezugnahme auf die Zeichnungen erläutert. Die Zeichnungen sind schematische Darstellungen und zeigen:
- Fig. 1: ein erfindungsgemäßes Kraftfahrzeug mit einem automatischen Sicherheitssystem;
- Fig. 2: ein Diagramm, das den zeitlichen Verlauf der Beschleunigung bei einem Bremsvorgang eines herkömmlichen Kraftfahrzeugs zeigt;
- Fig. 3: ein Diagramm, das den zeitlichen Verlauf der Verzögerung bei einem erfindungsgemäßen Kraftfahrzeug zeigt; und
- Fig. 4: ein weiteres Diagramm, das den zeitlichen Verlauf der Verzöge- rung bei einem erfindungsgemäßen Kraftfahrzeug zeigt.

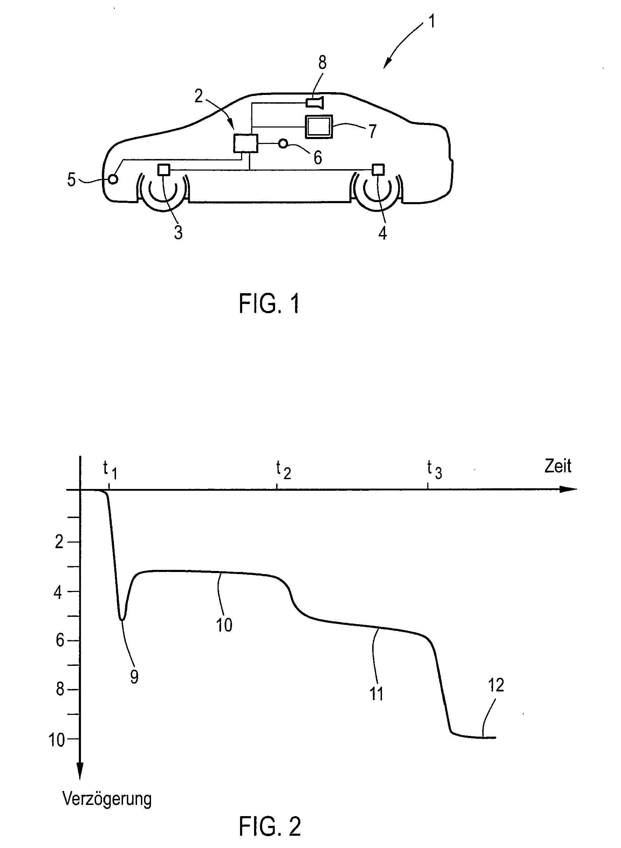

Das in Fig. 1 gezeigte Kraftfahrzeug 1 umfasst ein automatisches Sicherheitssystem 2, durch das bei einer erkannten gefährlichen Situation ein Bremsvorgang auslösbar ist. Wie in Fig. 1 gezeigt ist, ist das Sicherheitssystem 2 mit Bremseinrichtungen 3, 4 der Vorder- und Hinterräder verbunden und kann auf diese Weise einen Bremsvorgang auslösen oder die Bremsen wieder freigeben. Das Sicherheitssystem 2 umfasst ferner Sensoren 5, die in dem dargestellten Ausführungsbeispiel als Radarsensor ausgebildet sind und mit denen das Fahrzeugvorfeld erfasst werden kann. Das als Adaptive Cruise Control (ACC) ausgebildete Sicherheitssystem 2 ist in der Lage, mittels der Sensoren 5 ein vorausfahrendes Fahrzeug zu erfassen. Mittels einer Abstandsermittlung kann erfasst werden, ob das vorausfahrende Fahrzeug bremst oder beschleunigt, um in entsprechender Weise das eigene Kraftfahrzeug 1 abzubremsen oder zu beschleunigen, wodurch der Abstand zum vorausfahrenden Fahrzeug geregelt wird. Das Sicherheitssystem 2 umfasst eine Eingabeeinrichtung 6, mittels der der Fahrer Bedienkommandos eingibt. Weiterhin ist eine Anzeige 7 vorgesehen, die in dem dargestellten Ausführungsbeispiel als Flachbildschirm ausgebildet ist. Ebenso dient ein Lautsprecher 8 zur Ausgabe akustischer Warnsignale an den Fahrer.

Fig. 2 ist ein Diagramm, das den zeitlichen Verlauf der Verzögerung bei einem Bremsvorgang eines herkömmlichen Kraftfahrzeugs zeigt. Die Verzögerung ist auf der vertikalen Achse aufgetragen, die Zeit auf der wagerechten Achse.

Wenn durch das Sicherheitssystem 2 eine gefährliche Situation erkannt worden ist, beispielsweise ein zu geringer Abstand zum vorausfahrenden Fahrzeug oder wenn das vorausfahrende Fahrzeug plötzlich stark bremst, wird durch das Sicherheitssystem 2 zunächst eine optische und akustische Warnung über den Lautsprecher 8 und die Anzeige 7 ausgegeben. Gleichzeitig wird ein Bremsvorgang ausgelöst. Wie in Fig. 2 gezeigt ist, wird zum Zeitpunkt t₁ eine Warnbremsung 9 ausgelöst, die vom Fahrer als Ruck empfunden wird. Diese Warnbremsung 9 ist jedoch kurz, anschließend wird die Bremse teilweise wieder gelöst, sodass die Verzögerung sich verringert. Danach wird zum Zeitpunkt t₂ ein erster Teilbremsvorgang 10 mit einer ersten Verzögerung durchgeführt. Dieser Vorgang dauert wesentlich länger als die vorangegangene Warnbremsung 9. In Fig. 2 ist erkennbar, dass der Teilbremsvorgang 10 mit geringfügig ansteigender Verzögerung durchgeführt wird. Alternativ kann der erste Teilbremsvorgang auch mit konstanter Verzögerung durchgeführt werden. Wenn das Sicherheitssystem 2 erkennt, dass der durchgeführte Bremsvorgang nicht ausreicht, um eine Kollision zu vermeiden bzw. einen ausreichenden Sicherheitsabstand zu schaffen, wird anschließend zum Zeitpunkt t₃ ein zweiter Teilbremsvorgang 11 mit einer zweiten Verzögerung eingeleitet. Die zweite Verzögerung ist größer als die Verzögerung des ersten Teilbremsvorgangs 10. In dem dargestellten Ausführungsbeispiel steigt die Verzögerung während des Teilbremsvorgangs 11 an. Falls dieser zweite Teilbremsvorgang nicht ausreicht, um einen ausreichenden Sicherheitsabstand zu schaffen, wird eine Notbremsung 12 mit maximaler Verzögerung durchgeführt, bis das Fahrzeug zum Stillstand kommt.

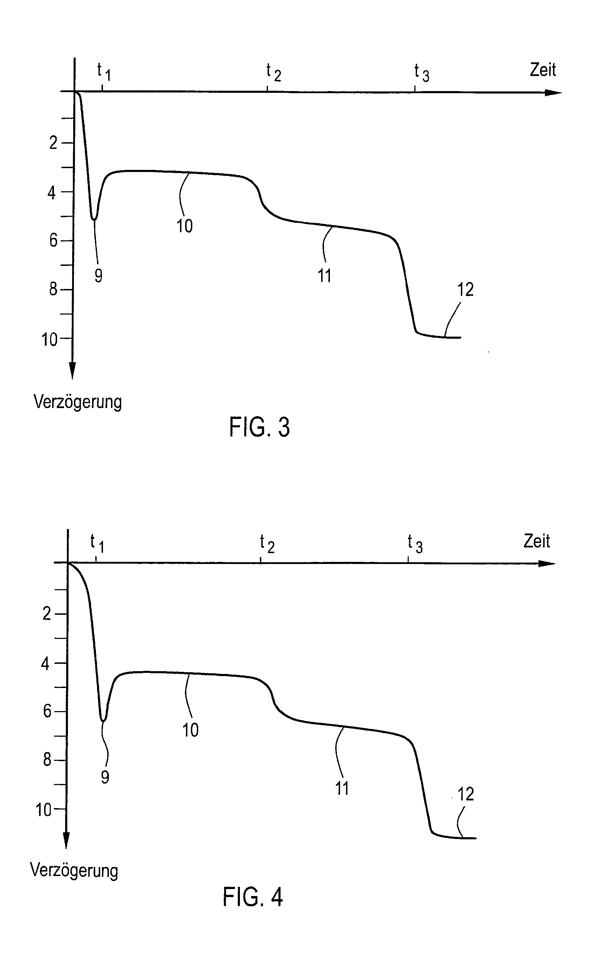

Fig. 3 ist ein Diagramm, das den zeitlichen Verlauf der Verzögerung bei einem Bremsvorgang eines erfindungsgemäßen Kraftfahrzeugs zeigt. Während eines normalen" Bremsvorgangs, der nicht automatisch durch das Sicherheitssystem 2 ausgelöst wird, wird eine Ermittlung oder Schätzung des Reibwerts zwischen Fahrzeugreifen und Fahrbahn vorgenommen, indem vorgegebene Verläufe des Bremsdrucks eingestellt und mit bekannten Verzögerungsverläufen verglichen werden. Sofern sich dabei Änderungen ergeben, ist von einem verschlechterten Reibwert auszugehen. Dieser verschlechterte Reibwert wird bei einem durch das Sicherheitssystem 2 automatisch ausgelösten Bremsvorgang berücksichtigt. Da der Reibwert verschlechtert ist, wird der Bremsvorgang zeitlich früher ausgelöst, wie in Fig. 3 gezeigt ist. Beim Vorliegen der gleichen Bedingungen wie in dem Diagramm von Fig. 2 wird der Bremsvorgang zeitlich früher ausgelöst. Die Warnbremsung 9 erfolgt unmittelbar nach dem Erkennen einer gefährlichen Situation, ebenso erfolgen die Teilbremsvorgänge 10, 11 sowie die Notbremsung 12 früher im Vergleich zu dem in Fig. 2 gezeigten Fall. Dementsprechend kann durch das Sicherheitssystem 2 ein Unfall auch dann verhindert oder die Unfallschwere vermindert werden, wenn der Reibwert zwischen den Reifen des Fahrzeugs und der Fahrbahn durch die Witterung oder andere Einflüsse verschlechtert ist.

Fig. 4 ist ein weiteres Diagramm, das den zeitlichen Verlauf der Verzögerung beim Bremsvorgang eines erfindungsgemäßen Kraftfahrzeugs zeigt. Auch in diesem Fall wurde von dem Sicherheitssystem 2 ein Reibwert ermittelt, der gegenüber dem normalen Reibwert bei trockener Fahrbahn verschlechtert ist. Dementsprechend würde sich der Bremsweg bzw. der gesamte Bremsvorgang verlängern. Um diese nachteilige Wirkung zu vermeiden, ist das Sicherheitssystem 2 so ausgebildet, dass der Bremsvorgang mit einer größeren Verzögerung durchgeführt wird. Im Vergleich mit dem in Fig. 2 gezeigten Diagramm ist in Fig. 4 erkennbar, dass die verschiedenen Abschnitte des automatisch ausgelösten Bremsvorgangs mit einer größeren Verzögerung durchgeführt werden. Dies gilt sowohl für die Warnbremsung 9 als auch für die Teilbremsvorgänge 10, 11 und die Notbremsung 12. Die größere Verzögerung wird durch einen entsprechend erhöhten Bremsdruck bewirkt, mit dem die Bremseinrichtungen 3,4 des Kraftfahrzeugs 1 beaufschlagt werden. Durch die größere Verzögerung wird der Bremsweg verkürzt, sodass ein Unfall vermieden werden kann.

## Patentansprüche

1. Kraftfahrzeug, mit einem automatischen Sicherheitssystem, das derart ausgebildet ist, dass bei einer erkannten gefährlichen Situation ein Bremsvorgang auslösbar ist, indem vor oder beim Auslösen des Bremsvorgangs der zwischen den Reifen des Kraftfahrzeugs und dem Fahrbahnbelag wirkende Reibwert zumindest näherungsweise erfasst oder abgeschätzt und bei dem Bremsvorgang berücksichtigt wird, **dadurch gekennzeichnet,**
**dass** das Sicherheitssystem (2) so ausgebildet ist, dass beim oder vor dem Auslösen des Bremsvorgangs eine Warnbremsung (9) ausgelöst wird, die wesentlich kürzer als der nachfolgende Bremsvorgang ist.

2. Kraftfahrzeug nach Anspruch 1,
**dadurch gekennzeichnet,**
**dass** das Sicherheitssystem (2) so ausgebildet ist, dass die Erfassung oder Schätzung des Reibwerts während eines Bremsvorgangs mit zumindest näherungsweise konstanter Verzögerung erfolgt.

3. Kraftfahrzeug nach Anspruch 1 oder 2,
**dadurch gekennzeichnet,**
**dass** das Sicherheitssystem (2) so ausgebildet ist, dass der Bremsvorgang zeitlich früher ausgelöst wird, wenn der erfasste oder abgeschätzte Reibwert niedriger als ein normaler Reibwert ist.

4. Kraftfahrzeug nach einem der vorangehenden Ansprüche,
**dadurch gekennzeichnet,**
**dass** das Sicherheitssystem (2) so ausgebildet ist, dass der Bremsvorgang mit einer größeren Verzögerung durchgeführt wird, wenn der erfasste oder abgeschätzte Reibwert niedriger als ein normaler Reibwert ist.

5. Kraftfahrzeug nach einem der vorangehenden Ansprüche,
**dadurch gekennzeichnet,**
**dass** das Sicherheitssystem (2) so ausgebildet ist, dass beim oder vor dem Auslösen des Bremsvorgangs ein optisches und/oder akustisches Warnsignal ausgegeben wird.

6. Kraftfahrzeug nach einem der vorangehenden Ansprüche,
**dadurch gekennzeichnet,**
**dass** die Verzögerung der Warnbremsung größer als die Verzögerung des zumindest unmittelbar nachfolgenden Bremsvorgangs ist.

7. Kraftfahrzeug nach einem der vorangehenden Ansprüche,
**dadurch gekennzeichnet,**
**dass** das Sicherheitssystem (2) so ausgebildet ist, dass zunächst ein erster Teilbremsvorgang (10) mit einer ersten Verzögerung und anschließend ein zweiter Teilbremsvorgang (11) mit einer zweiten Verzögerung ausgelöst wird.

8. Kraftfahrzeug nach Anspruch 7,
**dadurch gekennzeichnet,**
**dass** die erste Verzögerung und/oder die zweite Verzögerung im Wesentlichen konstant ist bzw. sind.

9. Kraftfahrzeug nach Anspruch 7 oder 8,
**dadurch gekennzeichnet,**
**dass** das Sicherheitssystem (2) so ausgebildet ist, dass die zweite Verzögerung größer als die erste Verzögerung ist.
